Europäisches Patentamt

European Patent Office

Office européen des brevets

(11) Numéro de publication: **0 480 831 B1**

(12) **FASCICULE DE BREVET EUROPEEN**

(45) Date de publication de fascicule du brevet: **07.12.94**

(51) Int. Cl.5: **C04B 35/66**, C04B 35/10, C04B 35/65, B22D 41/32

(21) Numéro de dépôt: **91402697.6**

(22) Date de dépôt: **09.10.91**

(54) **Pièces réfractaires pour dispositifs de régulation ou d'interruption d'un jet d'acier, en matériau réfractaire à haute teneur en alumine et à liant sialon.**

(30) Priorité: **11.10.90 FR 9012545**

(43) Date de publication de la demande:
**15.04.92 Bulletin 92/16**

(45) Mention de la délivrance du brevet:
**07.12.94 Bulletin 94/49**

(84) Etats contractants désignés:
**AT BE DE ES FR GB IT NL SE**

(56) Documents cités:
**EP-A- 0 317 980**
**WO-A-90/02822**
**DE-A- 3 320 016**
**DE-A- 3 500 422**
**GB-A- 2 075 965**

**WORLD PATENTS INDEX LATEST Derwent Publications Ltd.,London, GB; AN 89-173354 &DD-A-263 750 (AKAD WISSENSVHAFT DDR) 11 Janvier 1989**

(73) Titulaire: **SAVOIE REFRACTAIRES**
**10 rue de l'Industrie**
**F-69631 Venissieux (FR)**

(72) Inventeur: **Schoennahl, Jacques Paul Raymond**
**4 Allée Marcel Achard**
**F-69100 Villeurbanne (FR)**
Inventeur: **Kuster, Daniel**
**32 rue des Granges**
**F-69005 Lyon (FR)**

(74) Mandataire: **Colas, Jean-Pierre et al**
**Cabinet de Boisse**
**37, avenue Franklin D. Roosevelt**
**F-75008 Paris (FR)**

Rank Xerox (UK) Business Services
(3.10/3.09/3.3.3)

## Description

Dans les aciéries, le contrôle de la coulée du métal fait appel à des dispositifs de régulation ou d'interruption du jet bien connus, à savoir :
- les busettes calibrées pour coulée à jet libre
- le système à tampon et busette, et
- le système de fermeture à tiroir, comprenant typiquement une brique de siège, une busette interne, une plaque fixe, une plaque mobile, et une busette collectrice.

Les pièces qui composent ces dispositifs et qui sont en contact avec le métal en fusion, doivent être réalisées à partir de matériaux réfractaires de haute performance. En effet, pour obtenir une durée de vie suffisante, et ne pas mettre en danger les installations et le personnel par une rupture accidentelle, ces matériaux doivent présenter les caractéristiques suivantes :
- résistance mécanique à haute température très élevée,
- excellente résistance à la corrosion par l'acier,
- bonne résistance aux chocs thermiques, et
- conductivité thermique faible, pour éviter un bouchage par solidification du métal, lorsque le jet est momentanément interrompu. Cette conductivité doit être de préférence inférieure à environ 5 W/m.K à 800°C,
- un coefficient de dilatation faible, c'est-à-dire inférieur à environ $9*10^{-6} K^{-1}$. Cette propriété est importante car dans les applications comme claques de fermetures à tiroir, les pièces sont frettées dans des ensembles mécaniques et les déformations liées aux forts gradients thermiques doivent être évitées.

Dans le cas des systèmes de fermeture à tiroir, deux types de matériaux réfractaires sont actuellement utilisés de façon courante pour réaliser les plaques :
- les matériaux à base de magnésie de haute pureté, pressés et cuits à haute température, et
- les matériaux formés de corindon à liant mullite, pressés et cuits à haute température.

Le Tableau I ci-après donne les caractéristiques principales de deux produits typiques, couramment utilisés actuellement.

La résistance aux chocs ou variations thermiques a été déterminée en mesurant la perte de résistance à la flexion à froid obtenue sur des barreaux de 125x25x25 mm soumis au traitement suivant :
- introduction brutale des éprouvettes dans un four chauffé à 1200°C, maintien pendant 30 mn, puis trempe des éprouvettes dans de l'eau froide.

La résistance à la corrosion a été déterminée par la méthode dynamique dite des "doigts tournants". Quatre éprouvettes, taillées en forme de barreau, sont fixées en cercle sur un support animé d'un mouvement de rotation selon un axe vertical. Au moins une des éprouvettes sert de référence.

L'agent d'attaque, par exemple de l'acier ou un laitier fondu, est placé dans un creuset réfractaire et porté à une température supérieure à son point de fusion. Lorsque la température d'essai est atteinte, le support porte-éprouvettes est abaissé de façon à plonger l'extrémité inférieure des éprouvettes dans l'agent d'attaque pendant un temps prédéterminé. A la fin de l'essai, le support porte-éprouvettes est relevé de façon à extraire les éprouvettes de l'agent d'attaque fondu, avant solidification de celui-ci. Après refroidissement, on mesure la perte d'épaisseur des éprouvettes.

Les résultats de cet essai rapportés dans le Tableau I ont été obtenus en utilisant un acier XC 30 à 1700°C sous atmosphère d'argon comme agent d'attaque. Le temps de maintien des éprouvettes dans l'acier en fusion était de 4 heures et la vitesse de rotation du support porte-éprouvettes correspondait à une vitesse linéaire de 2,4 cm/s pour les éprouvettes.

Selon les conditions d'emploi spécifiques et la nature de l'acier, et surtout le choix de l'agent et du mode d'affinage, le sidérurgiste a actuellement le choix entre des plaques à base de magnésie ou à base de corindon à liant mullite.

Les plaques de magnésie sont réputées être plus résistantes à la corrosion, mais elles sont sensibles aux chocs thermiques et leur conductivité thermique élevée favorise le bouchage des dispositifs de coulée dans les zones de restriction, par solidification du métal ou d'une couche de laitier.

Dans de nombreux cas, les aciers sont affinés par addition d'éléments réducteurs puissants tels que l'aluminium, et le calcium, en vue de les désoxyder. Ces additifs, présents en excès, peuvent attaquer le cas échéant, les composants du matériau réfractaire facilement réductibles, telle que la silice (cas des matériaux à base de corindon à liant mullite). Il importe donc de disposer de matériaux réfractaires difficilement réductibles par l'aluminium et le calcium.

Par ailleurs, on connaît des matériaux se composant d'un granulat de carbure de silicium et d'une matrice liante à base de nitrure de silicium ou de sialon. Ces matériaux sont d'usage courant pour le revêtement réfractaire des hauts-fourneaux et la fabrication de supports de cuisson pour l'industrie céramique. Réputés pour leur excellente résistance mécanique à chaud et leur excellente résistance aux chocs thermiques, ils sont toutefois impropres pour les applications considérées ici, car leur résistance à la corrosion par l'acier est médiocre et leur conductivité thermique est trop élevée.

On connaît également, par EP-A-0 317 980, des matériaux réfractaires formés de grains à base d'alumine liés par un liant formé d'oxynitrure de silicium et de sialon dans lequel les raies caractéristiques du sialon sont plus intenses que celles caractéristiques de l'oxynitrure de silicium, ce dernier représentant toutefois un composant mineur substantiel. Ces matériaux sont recommandés pour la réalisation de matériel d'enfournement, comme matériaux structuraux réfractaires, et pour la réalisation de récipients destinés à contenir de l'aluminium fondu. Il n'est pas suggéré que ces matériaux pourraient être utiles pour la fabrication de pièces réfractaires constitutives d'un dispositif de régulation ou d'interruption d'un jet d'acier, c'est-à-dire susceptible de fonctionner à une température supérieure à 1540°C et au contact de l'acier en fusion.

C'est donc de façon surprenante que la Demanderesse a trouvé que les matériaux du type de ceux décrits ciaprès convenaient particulièrement bien à la fabrication de pièces réfractaires constitutives d'un dispositif de régulation ou d'interruption d'un jet d'acier.

L'invention concerne donc des pièces réfractaires pour dispositifs de régulation ou d'interruption d'un jet d'acier, caractérisées en ce qu'elles sont formées d'un matériau réfractaire consistant essentiellement en

a) 61 à 77% en poids de grains à base d'oxydes ayant une teneur en alumine d'au moins 50% en poids et un point de fusion supérieur à 1800°C, et

b) 39 à 23% en poids d'une matrice liante présentant un diagramme de rayons X dont les raies les plus intenses sont les raies caractéristiques d'un sialon de la formule $Si_{6-z}Al_zO_zN_{8-z}$ où $z$ vaut de 2,5 à 4 et de préférence de 2,5 à 3,5.

Les grains à base d'oxydes ayant une teneur en alumine d'au moins 50% en poids peuvent être, par exemple, des grains de corindon, des grains de spinelle ($MgO-Al_2O_3$), des grains du type mullite-zircone ou des grains du type corindon-spinelle.

Le choix d'un grain particulier sera fonction de l'application particulière envisagée. On a trouvé que les grains à plus de 90% en poids d'alumine, tels que les grains de corindon conviennent bien à la réalisation des plaques des systèmes de fermeture à tiroir, ou des composants des systèmes à tampon et busette. Les grains à au moins 70% d'alumine tels que les grains de spinelle ($MgO-Al_2O_3$) conviennent bien à la réalisation de busettes calibrées. Les grains fondus de mullite-zircone donnent des matériaux à haute résistance à la corrosion par l'oxyde de fer et conviennent bien à la réalisation des busettes internes des systèmes de fermeture à tiroir. Les grains fondus de corindon-spinelle permettent d'obtenir des matériaux présentant un bon compromis entre la résistance à la corrosion par l'oxyde de fer, la résistance à l'érosion et aux chocs thermiques et sont utiles pour la fabrication des busettes collectrices des systèmes de fermeture à tiroir.

La matrice liante contiendra aussi, de façon inévitable pour ce genre de composition, un ou plusieurs constituant(s) mineur(s) tels que le nitrure de silicium $Si_3N_4$, l'oxynitrure de silicium $Si_2ON_2$, la mullite azotée de composition $Al_6Si_6N_8O_9$, et le polytype 15R du nitrure d'aluminium, le total de ces constituants mineurs n'excédant pas environ 10% de la matrice liante.

Le dispositif de régulation ou d'interruption du jet d'acier peut être un système à tampon et busette ; un système de fermeture à tiroir pouvant comprendre une brique de siège, une busette interne, au moins une plaque fixe, une plaque mobile et une busette collectrice ; une busette calibrée pour la coulée à jet libre à partir d'une poche de répartiteur ou un dispositif analogue.

Les pièces réfractaires peuvent être, par exemple, les diverses pièces constitutives d'un système de fermeture à tiroir, notamment les plaques, l'embouchure d'une busette et la partie extrême du tampon venant s'appliquer contre l'embouchure de la busette d'un système à tampon et busette, ou une busette calibrée.

Comparé aux matériaux typiques à base de corindon à liant mullite ou à base de magnésie actuellement utilisés, le matériau utilisé dans l'invention se distingue par une excellente résistance au choc thermique et une résistance mécanique à chaud exceptionnelle. On notera également que, contrairement au produit à base de corindon à liant mullite, il ne comporte que très peu de silice susceptible d'être attaquée chimiquement par des additifs réducteurs, tels que l'aluminium, qui sont utilisés pour désoxyder certains aciers.

Outre le fait qu'ils ont une excellente résistance à la corrosion par l'acier fondu seul, on a observé que les matériaux utilisés dans l'invention présentent une résistance à la corrosion par les laitiers riches en $Fe_2O_3$ supérieure à celle de matériaux similaires mais dont la valeur de l'indice $z$ dans la formule du sialon indiquée ci-dessus est plus basse.

Les pièces de l'invention peuvent être fabriquées par un procédé consistant à former un mélange approprié à base d'un granulat de corindon, de silicium, d'alumine, d'un liant temporaire, et d'aluminium, à façonner ce mélange à la forme désirée par pressage uniaxe ou isostatique, à sécher la forme obtenue, puis à la cuire sous azote à une température de 1300 à 1600°C, pendant une durée de l'ordre de 4 à 12 heures, selon la taille des pièces. On peut ensuite pratiquer sur la pièce obtenue toutes les opérations de finition usuelles, telles qu'usinage, rectification, imprégnation par du brai, etc..... que l'on effectue habituellement sur les pièces réfractaires utilisées dans les dispositifs de régulation ou d'interruption de jet d'acier.

On donne ci-après la composition type, en % en poids, d'un mélange de départ approprié.

a) 70 à 80%, d'un granulat réfractaire à base d'oxydes dont la teneur en alumine est d'au moins 50%, et le point de fusion est supérieur à 1800°C et dont au moins 90% des particules sont comprises entre 5 mm et 20 µm,

b) 20 à 30% d'un mélange de poudres réactives comprenant :

(i) 35 à 45% de poudre de silicium dont au moins 90% des particules ont un diamètre inférieur à 150 µm ;

(ii) 38 à 50% d'alumine calcinée dont au moins 90% des particules ont un diamètre inférieur à 20 µm ;

(iii) 12 à 20% de poudre d'aluminium dont au moins 90% des particules ont un diamètre inférieur à 80 µm, le total des constituants (i) à (iii) représentant 100%,

c) 0 à 3% d'une argile réfractaire séchée et broyée, le total des ingrédients (a) à (c) représentant 100%, et

d) une petite quantité de liant temporaire.

C'est grâce à la présence simultanée des ingrédients (i), (ii) et (iii) dans le mélange de poudres réactives que l'on peut obtenir, de façon industrielle et économique, la formation de $\beta'$-sialon de la formule indiquée où $z = 2,5$ à 4.

Le liant temporaire (d) peut être constitué, par exemple, par une résine organique telle que les résines phénoliques, par les alcools furfuryliques ou polyvinyliques, par une solution aqueuse de polymères organiques tels que la dextrine, les carboxyméthylcelluloses, le lignosulfonate de calcium, etc... Habituellement, une proportion de 2 à 4% en poids environ de liant temporaire par rapport au total des ingrédients (a) à (c) s'avère satisfaisante.

Le rôle de l'argile (c) est de faciliter le pressage du mélange de départ.

On notera qu'il existe une différence entre la teneur en granulat d'oxydes réfractaires du mélange initial et la proportion de grains identifiables du produit fini, puisque la cuisson s'accompagne d'une fixation d'azote par les constituants métalliques et donc d'une prise de poids faisant que la proportion pondérale des grains dans le produit fini est moindre que la proportion pondérale du granulat du mélange de départ.

Les exemples non limitatifs suivants sont donnés dans le but d'illustrer l'invention.

EXEMPLE 1

On prépare un mélange de départ formé des constituants suivantes :

| | | |
|---|---|---|
| **Corindon noir 0,2 à 2 mm** | **40** | **% en poids** |
| **Corindon noir 20 µm à 0,2 mm** | **31** | **%** |
| **Silicium en poudre** | **11** | **%** |
| **Aluminium en poudre** | **5** | **%** |
| **Alumine fine calcinée** | **10** | **%** |
| **Argile broyée** | **3** | **%** |
| | **100** | **%** |
| **Dextrine en poudre** | **+ 0,5** | **%** |
| **Eau** | **+ 2** | **%** |

- le corindon noir est un corindon électro-fondu répondant à l'analyse suivante :

$Al_2O_3$ = 96% - $TiO_2$ = 3% - $SiO_2$ = 0,6% - $Fe_2O_3$ = 0,2% - CaO + MgO + $Na_2O$ + $K_2O$ = 0,2%

- le silicium en poudre est commercialisé par la Société PECHINEY ELECTROMETALLURGIE, sous l'appellation "Silicium T.140". Au moins 90% des particules ont un diamètre inférieur à 150 $\mu m$ ;
- l'aluminium en poudre est commercialisé par la Société PECHINEY ELECTROMETALLURGIE sous l'appellation " aluminium 200 TV". Au moins 90% des particules ont un diamètre inférieur à 80 $\mu m$ ;
- l'alumine fine calcinée est une alumine du commerce titrant au moins 99,5% d'$Al_2O_3$, et dont le diamètre de grain moyen est d'environ 5 $\mu m$ avec 90% des particules comprises entre 1 et 20 $\mu m$ ;
- l'argile broyée est commercialisée par la Société DENAIN-ANZIN-MINERAUX sous l'appellation DA. 40/42. Son analyse chimique est la suivante :
  perte au feu : 12,6% - $Al_2O_3$ : 36% - $SiO_2$ : 47% - $Fe_2O_3$ : 1,8% - $TiO_2$ : 1,8% - CaO + MgO + $Na_2O$ + $K_2O$ : 0,8%.

Ce mélange est mis, à la presse hydraulique, sous forme d'une plaque pour un dispositif de fermeture à tiroir, par pressage uniaxe sous une pression spécifique de 1000 bars.

On sèche la plaque obtenue à 150°C puis on la cuit sous azote à 1450°C.

Le tableau I ci-dessous résume les propriétés du matériau de l'exemple 1 comparées à celles de deux matériaux classiques.

## TABLEAU 1

| Type de produit | Corindon à liant mullite | Magnésie | Corindon à liant Sialon (z = 3) |
|---|---|---|---|
| (%) $Al_2O_3$<br>$SiO_2$<br>$ZrO_2$<br>MgO<br>Sialon<br>Divers | 87,5<br>7,5<br>4,5<br>-<br>-<br>0,5 | -<br>0,5<br>-<br>97<br>-<br>2,5 | 65<br>0,5<br>-<br>-<br>33,5<br>1 |
| Densité | 3,15 | 3,07 | 3,14 |
| Résistance à la flexion à 1500°C (MPa) | 11 | 9 | 30 |
| Coefficient de dilatation $10^{-6}$ $K^{-1}$ | 7,1 | 14,4 | 5,2 |
| Coefficient de conductivité thermique à 800°C (W/mK) | 2,2 | 7,5 | 3,4 |
| Résistance au choc thermique comme déterminé par la perte de résistance à la flexion après trempe (%) | -56 | -92 | -47 |
| Résistance à la corrosion par l'acier à 1700°C Taux d'usure (%) | 0 | 0 | 0 |

On voit que le produit formé de corindon à liant mullite présente une faible résistance à la flexion à chaud. En outre le $SiO_2$ constitutif est susceptible d'être attaqué par les agents réducteurs de désoxydation. Le produit à base de magnésie présente, de son côté, outre une faible résistance à la flexion à chaud, une médiocre résistance au choc thermique et une conductivité thermique élevée. Au contraire le produit de l'invention présente un bon compromis de propriétés (bonne résistance à la flexion, faible conductivité thermique, faible coefficient de dilatation et bonne résistance au choc thermique). Des tampons et plaques de fermeture à tiroir ont été réalisés à partir de la composition de l'exemple 1 et testés sur un répartiteur. Une durée de vie supérieure d'au moins 50% à celle de pièces semblables réalisées à partir de matériaux de corindon à liant mullite a été constatée.

EXEMPLE 2

On a préparé par le mode opératoire décrit dans l'Exemple 1 deux échantillons A (en dehors de l'invention) et B (selon l'invention) de matériaux à liant sialon, ayant des valeurs de z différentes et on a déterminé leurs résistances à la corrosion par un laitier pauvre en $Fe_2O_3$ et par un laitier riche en $Fe_2O_3$, par la méthode dynamique des doigts tournants précédemment décrite, ainsi que leur stabilité thermique par recuisson à très haute température sous argon.

Le tableau 2 ci-après résume les ingrédients de départ utilisés et les résultats obtenus dans les essais de corrosion et de stabilité thermique.

### TABLEAU 2

#### INFLUENCE DE L'INDICE Z
#### SUR LA RESISTANCE A LA CORROSION
Liant sialon : Si6-z Alz Oz N8-z

| | Matériau | A | B |
|---|---|---|---|
| **Ingrédients de départ** | Corindon noir 2/5 mm | 30 | 30 |
| | Corindon noir 0,2/2 mm | 40 | 40 |
| | Corindon noir 0,2/0,02 mm | 5 | 4 |
| | Alumine fine calcinée | 10 | 10 |
| | Silicium T.140 | 15 | 11 |
| | Aluminium 200 TV | - | 5 |
| | Carboxyméthylcellulose | + 0,3 | + 0,3 |
| | Dextrine en poudre | + 0,5 | + 0,5 |
| | Eau | + 3 | + 3 |
| **Propriétés** | Indice z du sialon | 1,3 | 3 |
| | Proportion matrice liante | 32 | 33 |
| | Corrosion par laitier pauvre en $Fe_2O_3$ * Taux d'usure (%) | - 10 | - 10 |
| | Corrosion par laitier riche en $Fe_2O_3$ ** Taux d'usure (%) | - 52 | - 22 |
| | Stabilité thermique *** Perte de poids (%) | - 13,5 | - 7,2 |

Test de résistance à la corrosion par la méthode dynamique des doigts tournants
* 1600°C/4 h/Argon - laitier : $SiO_2$ = 36,7% - $Al_2O_3$ = 11,6% - $Fe_2O_3$ = 1,9% - CaO = 39,8% - MgO = 6,95% - $TiO_2$ = 0,6% - $Na_2O$ + $K_2O$ = 0,75%
** 1525°C/4 h/Argon - laitier : $SiO_2$ = 20% - $Al_2O_3$ = 12,5% - $Fe_2O_3$ = 25% - $TiO_2$ = 0,7% - CaO = 35% - MgO = 4%- $Na_2O$ + $K_2O$ = 1,2%
*** Perte de poids après recuisson à 1750°C durant 5 heures sous argon.

On voit que l'échantillon B qui présente une valeur de l'indice z plus élevée que l'échantillon A, a une meilleure résistance à la corrosion par un laitier riche en $Fe_2O_3$ et une plus grande stabilité thermique. Il apparaît égalaient que, dans les conditions de fabrication industrielles décrites, l'addition de poudre d'aluminium au mélange est nécessaire pour obtenir une matrice liante constituée d'un sialon d'indice z élevé.

<u>EXEMPLE 3</u>

Cet exemple illustre la production de matériaux réfractaires C, D et E à partir de trois granulats autres que le corindon. Le mode opératoire était celui de l'exemple 1.

Les granulats utilisés étaient les suivants :
- "Spinelle" est un spinelle $MgO$-$Al_2O_3$ fondu répondant à l'analyse pondérale suivante : $Al_2O_3$ = 70%- $MgO$ = 29% - $SiO_2$ = 0,6% - $Fe_2O_3$ = 0,4%
- "ER 1681" est un grain électrofondu de Mullite-Zircone commercialisé par la Société Européenne des Produits Réfractaires, 84131 Le Pontet, France, et répondant à l'analyse pondérale suivante : $Al_2O_3$ = 50,6%-$ZrO_2$ = 32,5% - $SiO_2$ = 15,6% - $Na_2O$ = 1,1% - autres 0,2%.
- "ER 5312" est un grain électrofondu de corindonspinelle commercialisé par la Société Européenne des Produits Réfractaires, 84131 Le Pontet, France, et répondant à l'analyse suivante : $Al_2O_3$ = 87,5% - $MgO$ = 7%-$Na_2O$ = 4,5% - $SiO_2$ = 1%.

Le Tableau 3 ci-après récapitule les ingrédients de départ et les principales propriétés du matériau obtenu, y compris la proportion de matrice liante et sa composition.

## TABLEAU 3

| Matériau | | C | D | E |
|---|---|---|---|---|
| Ingrédients de départ | Spinelle (3 - 1 mm) | 35 | -- | -- |
| | " (< 1 mm) | 36 | -- | -- |
| | ER 5312 (3 - 1 mm) | -- | 35 | -- |
| | " (< 1 mm) | -- | 36 | -- |
| | ER 1681 (2 - 0,5 mm) | -- | -- | 46 |
| | " (0,5 - 0,1 mm) | -- | -- | 25 |
| | Aluminium 200 TV | 5 | 5 | 5 |
| | Silicium T.140 | 11 | 11 | 11 |
| | Alumine fine calcinée | 10 | 10 | 10 |
| | Argile broyée | 3 | 3 | 3 |
| | Dextrine en poudre | + 0,5 | + 0,5 | + 0,5 |
| | Eau | + 2 | + 2 | + 2 |
| Propriétés | Densité | 2,98 | 2,74 | 3,00 |
| | Résistance à la flexion à froid (MPa) | 28 | 20,2 | 31,8 |
| | Résistance à la flexion à 1500°C (MPa) | 27 | 19 | 4 |
| | Résistance au choc thermique comme déterminé par la perte de résistance à la flexion après trempe (%) | - 60 | - 45 | - 43 |
| | Proportion de matrice liante* | 32 | 34 | 30 |

*formée pour l'essentiel d'un sialon ayant un indice z égal à 3. L'échantillon C contenait des traces du polytype AlN 15R

**Revendications**

1. Pièce réfractaire pour dispositif de régulation ou d'interruption d'un jet d'acier, caractérisée en ce qu'elle est formée d'un matériau réfractaire consistant essentiellement en

a) 61 à 77% en poids de grains à base d'oxydes ayant une teneur en alumine d'au moins à 50% en poids et un point de fusion supérieur à 1800%C, et

b) 39 à 23% en poids d'une phase liante présentant un diagramme de rayons X dont les raies les plus intenses sont les raies caractéristiques d'un sialon de la formule $Si_{6-z}Al_zO_zN_{8-z}$ où z vaut de 2,5 à 4.

2. Pièce selon la revendication 1, caractérisée en ce que les grains ont une teneur en alumine supérieure à 70% en poids.

3. Pièce selon la revendication 1, caractérisée en ce que les grains ont une teneur en alumine supérieure à 90% en poids.

4. Pièce selon la revendication 3, caractérisée en ce que les grains sont des grains de corindon.

5. Pièce selon l'une quelconque des revendications 1 à 4, caractérisée en ce que z vaut de 2,5 à 3,5.

6. Pièce selon l'une quelconque des revendications 1 à 5, caractérisée en ce qu'elle est obtenue en mélangeant les constituants suivants dans les proportions en % en poids indiquées :

a) 70 à 80%, d'un granulat réfractaire à base d'oxydes dont la teneur en alumine est d'au moins 50%, le point de fusion est supérieur à 1800°C et dont au moins 90% des particules sont comprises entre 5 mm et 20 $\mu$m,

b) 20 à 30% d'un mélange de poudres réactives comprenant :

(i) 35 à 45% de poudre de silicium dont au moins 90% des particules ont un diamètre inférieur à 150 $\mu$m ;

(ii) 38 à 50% d'alumine calcinée dont au moins 90% des particules ont un diamètre inférieur à 20 $\mu$m,

(iii) 12 à 20% de poudre d'aluminium dont au moins 90% des particules ont un diamètre inférieur à 80 $\mu$m, le total des constituants (i) à (iii) représentant 100%,

c) 0 à 3% d'une argile réfractaire séchée et broyée, le total des ingrédients (a) à (c) représentant 100%, et,

d) une petite quantité d'un liant temporaire ; en mettant le mélange résultant à la forme désirée par pressage, en séchant la pièce résultante, et en la cuisant sous azote à une température de 1300 à 1600°C.

7. Pièce selon la revendication 6, caractérisée en ce que le granulat (a) a une teneur en alumine supérieure à 90% en poids.

8. Pièce selon l'une quelconque des revendications 1 à 7, caractérisée en ce qu'elle est une plaque fixe ou mobile d'un dispositif de fermeture à tiroir.

9. Pièce selon l'une quelconque des revendications 1 à 7, caractérisée en ce qu'elle est une brique de siège, une busette interne ou une busette collectrice d'un dispositif de fermeture à tiroir, ou une busette calibrée.

10. Pièce selon l'une quelconque des revendications 1 à 7, caractérisée en ce qu'elle est un composant d'un système à tampon et busette.

**Claims**

1. Refractory part for a device for regulation or interruption of a jet of steel, characterised in that it is formed from a refractory material consisting essentially of

a) 61 to 77% by weight of oxide-based particles, having an alumina content of at least 50% by weight and a melting point higher than 1800°C, and

b) 39 to 23% by weight of a binding phase having a X-ray diagram in which the most intense lines are the lines characteristic of a sialon of the formula $Si_{6-z}Al_zO_zN_{8-z}$ where z ranges from 2.5 to 4.

2. Part according to Claim 1, characterised in that the particles have an alumina content higher than 70% by weight.

10

3. Part according to Claim 1, characterised in that the particles have an alumina content higher than 90% by weight.

4. Part according to Claim 3, characterised in that the particles are corundum particles.

5. Part according to any one of Claims 1 to 4, characterised in that z ranges from 2.5 to 3.5.

6. Part according to any one of Claims 1 to 5, characterised in that it is obtained by mixing the following constituents in the indicated proportions in % by weight:
a) 70 to 80% of a refractory oxide-based aggregate which has an alumina content of at least 50% and a melting point higher than 1800°C, and at least 90% of the particles of which are between 5 mm and 20 $\mu$m,
b) 20 to 30% of a mixture of reactive powders comprising:
(i) 35 to 45% of silicon powder, at least 90% of the particles of which have a diameter smaller than 150 $\mu$m;
(ii) 38 to 50% of calcined alumina, at least 90% of the particles of which have a diameter smaller than 20 $\mu$m;
(iii) 12 to 20% of aluminum powder, at least 90% of the particles of which have a diameter smaller than 80 $\mu$m, the sum of the constituents (i) to (iii) representing 100%,
c) 0 to 3% of a dried and ground refractory clay, the sum of the ingredients (a) to (c) representing 100%, and
d) a small amount of a temporary binder;
forming the resulting mixture into the desired shape by pressing, drying the resulting part and calcining it under nitrogen at a temperature of 1300 to 1600°C.

7. Part according to Claim 6, characterised in that the aggregate (a) has an alumina content higher than 90% by weight.

8. Part according to any one of Claims 1 to 7, characterised in that it is a fixed or mobile plate for a sliding nozzle device.

9. Part according to any one of Claims 1 to 7, characterised in that it is a seating brick, an internal nozzle or a collecting nozzle of a sliding nozzle device, or a calibrated nozzle.

10. Part according to any one of Claims 1 to 7, characterised in that it is a component of a plug and nozzle system.

**Patentansprüche**

1. Feuerfestes Teil für eine Vorrichtung zur Regulierung oder Unterbrechung eines Stahlstrahls, dadurch gekennzeichnet, daß es aus einem feuerfesten Material besteht, im wesentlichen bestehend aus
a) 61 bis 77 Gew.-% Körner auf Oxidbasis mit einem Aluminiumoxidgehalt von wenigstens 50 Gew.-% und einem Schmelzpunkt oberhalb 1800°C und
b) 39 bis 23 Gew.-% einer Bindephase, die ein Röntgendiagramm ergibt, dessen intensivste Streifen die charakteristischen Streifen eines Sialons der Formel $Si_{6-z}Al_zO_zN_{8-z}$ sind, worin z zwischen 2,5 und 4 liegt.

2. Teil gemäß Anspruch 1, dadurch gekennzeichnet, daß die Körner einen Aluminiumoxidgehalt von über 70 Gew.-% haben.

3. Teil gemäß Anspruch 1, dadurch gekennzeichnet, daß die Körner einen Aluminiumoxidgehalt von über 90 Gew.-% haben.

4. Teil gemäß Anspruch 3, dadurch gekennzeichnet, daß die Körner Korundkörner sind.

5. Teil gemäß einem der Ansprüche 1 bis 4, dadurch gekennzeichnet, daß z zwischen 2,5 und 3,5 liegt.

6. Teil gemäß einem der Ansprüche 1 bis 5, dadurch gekennzeichnet, daß es erhalten wird, indem man die folgenden Bestandteile in den angegebenen Gewichtsprozent-Verhältnissen miteinander mischt:

a) 70 bis 80% eines feuerfesten Granulats auf Oxidbasis, dessen Aluminiumoxidgehalt mindestens 50% beträgt, dessen Schmelzpunkt oberhalb 1800°C liegt und wovon wenigstens 90% der Teilchen eine Größe zwischen 5 mm und 20 µm besitzen,

b) 20 bis 30% eines Gemisches reaktiver Pulver, umfassend:

(I) 35 bis 45% Siliciumpulver, wovon wenigstens 90% der Teilchen einen Durchmesser unter 150 µm besitzen;

(II) 38 bis 50% calciniertes Aluminiumoxid, wovon wenigstens 90% der Teilchen einen Durchmesser unter 20 µm besitzen;

(III) 12 bis 20% Aluminiumpulver, wovon wenigstens 90% der Teilchen einen Durchmesser unter 80 µm besitzen, wobei die Bestandteile (I) bis (III) zusammen 100% ergeben;

c) 0 bis 3% eines feuerfesten, getrockneten und gemahlenen Tons, wobei die Bestandteile (a) bis (c) zusammen 100% ergeben sowie

d) eine kleine Menge eines temporären Bindemittels;

wobei man das resultierende Gemisch durch Pressen in die gewünschte Form bringt, das resultierende Teil trocknet und unter Stickstoff bei einer Temperatur von 1300 bis 1600°C brennt.

7. Teil gemäß Anspruch 6, dadurch gekennzeichnet, daß das Granulat (a) einen Aluminiumoxidgehalt von über 90 Gew.-% hat.

8. Teil gemäß einem der Ansprüche 1 bis 7, dadurch gekennzeichnet, daß es sich um eine feste oder bewegliche Platte einer Schiebeverschlußvorrichtung handelt.

9. Teil gemäß einem der Ansprüche 1 bis 7, dadurch gekennzeichnet, daß es sich um einen Pfannenboden-Lochstein, eine interne Düse, eine Sammeldüse einer Schiebeverschlußvorrichtung oder eine kalibrierte Düse handelt.

10. Teil gemäß einem der Ansprüche 1 bis 7, dadurch gekennzeichnet, daß es sich um einen Bestandteil eines Stopfen-Düsen-Systems handelt.